# EUROPÄISCHE PATENTSCHRIFT

(11) **EP 2 477 809 B1**
(45) Veröffentlichungstag und Bekanntmachung des Hinweises auf die Patenterteilung: **18.02.2015**
(21) Anmeldenummer: 10757148.1
(22) Anmeldetag: 15.09.2010
(51) Int. Cl.: B32B 3/02

(54) **WABENSTRUKTURELEMENT**
HONEYCOMB STRUCTURE ELEMENT
ÉLÉMENT À STRUCTURE ALVÉOLAIRE

(30) Priorität: 15.09.2009 CH 142009
(43) Veröffentlichungstag der Anmeldung: 25.07.2012
(73) Patentinhaber: REP IP AG, 6300 Zug (CH)
(72) Erfinder: GANSER, Fritz, CH-4125 Riehen (CH); ROS, Nico, 4052 Basel (CH)
(74) Vertreter: Bohest AG
(86) Internationale Anmeldenummer: PCT/CH2010/000220
(87) Internationale Veröffentlichungsnummer: WO 2011/032299

(56) Entgegenhaltungen:
- GB-A- 2 220 612

## Beschreibung

Die Erfindung betrifft ein Wabenstrukturelement mit einer mindestens teilweise geschlossenen Wabenstruktur, welche durch das Zusammenfügen mindestens zweier strukturierter Schichten mit einseitig offenen Wabenzellen gebildet ist. Die Erfindung betrifft ferner ein Verfahren zur Herstellung eines solchen Wabenstrukturelements.

Materialien mit Wabenstruktur finden schon seit langem Verwendung in der Technik, z.B. in Form von Paneelen denen die Wabenstruktur unter anderem Stabilität verleiht. Solche Paneele werden sowohl als tragende Strukturen als auch zu Isolationszwecken eingesetzt. Bekannt sind darüber hinaus auch Folien, z.B. Luftkissenfolien, die zu Isolations- oder Verpackungszwecken eingesetzt werden. So beschreibt zum Beispiel EP-A-0465719 einen flächigen Gegenstand mit Wabenstruktur und ein Verfahren zu dessen Herstellung, bei dem Wabenzellen einseitig (oder beidseitig) mit einer durch Erwärmen erweichten Platte oder Folie abgedeckt werden, welche dann unter Ansaugen oder Andrücken wieder abgekühlt wird und so eine einseitig (oder beidseitig) geschlossene Wabenstruktur bildet.

US-B-5270092 beschreibt ein Isolations-Paneel das aus einem mehrschichtigen Polymermaterial gebildet ist, mit im Wesentlichen geschlossenen Strukturräumen, so dass der Wärmetransport durch das Paneel, insbesondere durch Konvektion minimal ist. Mindestens ein Teil des Paneel ist ferner mit einer Schicht mit geringem Emissionsgrad versehen, zur Minimierung des Wärmetransports durch Infrarotstrahlung.

EP-A-0153681 beschreibt ein Verfahren zur Herstellung von dreidimensionalen lichtdurchlässigen Wabenstrukturen aus Kunststoffen, bei dem durch Thermoformen (Warmformen oder Tiefziehen) von Kunststoff-Folien oder -Platten rippenförmige Strukturen gefertigt werden, die dann durch Verkleben, Verschweissen oder Heisssiegeln der rippenförmigen Vertiefungen durch eine Folie oder miteinander zusätzliche mechanische Festigkeit erreicht wird. Zum Schutz gegen äussere Einflüsse können die so hergestellten transparenten Wabenstrukturen auf einer oder beiden Aussenflächen mit einer transparenten Platte oder Folie abgedeckt, verklebt oder versiegelt werden. Durch Füllung der rippenförmigen Vertiefungen oder der gesamten lichtdurchlässigen Wabenstruktur mit einem Gas mit hohem Molekulargewicht kann die wärmedämmende Eigenschaft der dreidimensionalen Wabenstruktur gesteigert werden.

DE-A-4114506 beschreibt eine Luftkissenfolie insbesondere für Verpackungen, die aus zwei Folienbahnen aus schweiss- oder siegelbarem Material besteht, welche nach einem vorgegebenen Muster unter Bildung abgeschlossener luftoder gasgefüllter Kissen über Schweiss- oder Siegelnähte verbunden sind. Die Strukturierung der beiden Folienbahnen durch mechanisches Tiefziehen bildet pyramidenstumpfartige Ausformungen auf rechteckiger Basis die jeweils in einem inneren Quadrat geringerer Fläche enden. Die beiden Folienbahnen werden mit den beiden der Tiefzugseite jeweils abgewandten Seite so zusammengefügt, dass die Ausformungen der Folienbahnen einander gegenüberliegen und die Siegelfläche jeweils die der Tiefzugseite abgewandte Seite der Folienbahnen ist.

Der vorliegenden Erfindung liegt daher die Aufgabe zugrunde eine alternative oder verbesserte Wabenstruktur mit geschlossenen Wabenzellen bereitzustellen, sowie ein Verfahren zu deren Herstellung vorzuschlagen.

Diese Aufgabe wird durch das erfindungsgemässe Wabenstrukturelement des unabhängigen Patentanspruchs 1, sowie durch das Verfahren des unabhängige Patentanspruchs 13 zur Herstellung eines solchen Wabenstrukturelements gelöst. Vorteilhafte Ausführungsvarianten ergeben sich insbesondere aus den abhängigen Patentansprüchen.

Die vorliegende Erfindung löst einige Probleme der aus dem Stand der Technik bekannten Wabenstrukturelemente und deren Herstellungsverfahren. Insbesondere sind die Wabenstrukturelemente der vorliegenden Erfindung in einem einfachen und kostengünstigen Verfahren herstellbar, weisen bereits ohne zusätzliche Deckschichten eine mindestens teilweise geschlossenen Wabenstruktur auf, sind gasdicht und in ihrer Grösse skalierbar. Insbesondere weisen die Wabenstrukturelemente der vorliegenden Erfindung grosse Auflageflächen auf, die das Verbinden der Schichten, insbesondere das Verkleben oder Verschweissen, erleichtern und die Gasdichtigkeit der einzelnen Wabenzellen verbessern.

In einer bevorzugten Ausführungsform der Erfindung unter Verwendung zusätzlicher Deckschichten sind im Wesentlichen alle Wabenzellen mit Ausnahme der Ränder des Wabenstrukturelements geschlossen.

Die vorliegende Erfindung betrifft ein Wabenstrukturelement, umfassend mindestens zwei Schichten die zur Bildung einer mindestens teilweise geschlossenen Wabenstruktur miteinander verbunden sind. Die beiden.Schichten sind vorzugsweise komplementäre Schichten, d.h. dass die Strukturen (z.B. Erhebungen) der einen Schicht in die Strukturen (z.B. Vertiefungen) der anderen Schicht derart eingreifen, dass beim Zusammenfügen der Schichten eine übergeordnete (sekundäre) Struktur gebildet wird.

Dabei ist eine der zwei miteinander verbundenen Schichten eine erste strukturierte Schicht mit einseitig offenen Wabenzellen, und die andere Schicht ist eine zweite strukturierte Schicht mit einseitig.offenen Wabenzellen, wobei deren Strukturierung gleich oder unterschiedlich zur ersten Schicht sein kann. Vorzugsweise sind beide strukturierten Schichten in gleicher Weise strukturiert. Die Strukturierung dieser beiden Schichten wird im Folgenden auch als Primärstruktur bezeichnet.

Die beiden Schichten bilden in zusammengefügter und verbundener Form (d.h. als Sekundärstruktur) eine mindestens teilweise geschlossenen Wabenstruktur. Die beiden Schichten werden dabei vorzugsweise so zusammengefügt, dass die Öffnungen der Wabenzellen der ersten strukturierten Schicht von der zweiten strukturierten Schicht wegweisen und die Öffnungen der Wabenzellen der zweiten strukturierten Schicht von der ersten strukturierten Schicht wegweisen. D.h. vorzugsweise sind die Öffnungen der Primärstrukturen beider strukturierter Schichten zur Aussenseite des Wabenstrukturelements orientiert.

Die strukturierten Schichten der Primärstruktur werden vorzugsweise durch tiefgezogene Folien gebildet. Besonders bevorzugt sind die beiden strukturierten Schichten identisch und aus der gleichen tiefgezogenen Folie gebildet.

Die einseitig offenen Wabenzellen der Primärstruktur sind vorzugsweise Vertiefungen mit einer im Wesentlichen sechseckigen Grundfläche. Im "Wesentlichen sechseckig" heisst, dass auch Formen umfasst sind, deren geometrische Eigenschaften vor dem Zusammenfügen und/oder Verbinden einer sechseckigen Grundfläche entsprechen, die aber durch Prozesse beim Zusammenfügen und/oder Verbinden der Schichten zur Bildung der sekundären Wabenzellen nicht mehr vollständig als sechseckig erkennbar sind. Vorzugsweise haben die Vertiefungen welche die einseitig offenen, primären Wabenzellen bilden eine sechseckige Grundfläche, besonders bevorzugt eine sechseckig-gleichseitige Grundfläche.

Durch die oben beschriebene Anordnung sind mit Ausnahme von Randbereichen des Wabenstrukturelements nach dem Zusammenfügen vorzugsweise mindestens ein Drittel der Wabenzellen geschlossene (sekundäre) Wabenzellen.

Die einseitig offenen Wabenzellen haben vorzugsweise Wandflächen, die im Wesentlichen viereckig sind. Im "Wesentlichen viereckig" umfasst dabei trapezförmig, rhomboid oder rechteckig. Im "Wesentlichen viereckig" heisst dabei, dass auch Formen umfasst sind, deren geometrische Eigenschaften vor dem Zusammenfügen und/oder Verbinden einer viereckigen Grundfläche entsprechen, die aber durch Prozesse beim Zusammenfügen und/oder Verbinden der Schichten zur Bildung der sekundären Wabenzellen nicht mehr vollständig als viereckig erkennbar sind. Vorzugsweise haben die Vertiefungen welche die einseitig offenen, primären Wabenzellen bilden rechteckige oder trapezförmige Wandflächen, besonders bevorzugt trapezförmige Wandflächen.

Die offenen Wabenzellen mindestens einer der beiden strukturierten Schichten, vorzugsweise beider strukturierten Schichten, sind in einem bevorzugten Wabenstrukturelement jeweils durch eine äussere flache Schicht abgeschlossen. Diese äussere flache Schicht ist vorzugsweise durch eine flache Folien gebildet, besonders bevorzugt aus einer Folie die auch zur Herstellung der strukturierten Schichten verwendet wird. Dabei können die beiden strukturierten Schichten mit jeweils unterschiedlichen flachen Schichten abgeschlossen sein. Vorzugsweise sind die flachen Schichten aus der gleichen Folie gebildet.

Durch die oben beschriebene Anordnung sind mit Ausnahme von Randbereichen des Wabenstrukturelements nach dem Zusammenfügen vorzugsweise alle Wabenzellen des Wabenstrukturelements geschlossen.

Das vorgängig beschriebene Wabenstrukturelement kann ferner zusätzlich zu der ersten und zweiten strukturierten Schicht, d.h. dem ersten Paar strukturierter Schichten bzw. der ersten Döppelschicht, weitere damit verbundene strukturierte Schichten, einzeln oder als Paar strukturierter Schichten (d.h. zweite und weitere Doppelschichten), umfassen. Weiter kann das vorgängig beschriebene Wabenstrukturelement auch zusätzlich zu den mit äusseren flachen Schichten abgeschlossenen ersten und zweiten strukturierten Schichten, d.h. dem mit Deckschichten geschlossenen ersten Paar strukturierter Schichten bzw. der ersten abgeschlossenen Doppelschicht, weitere damit verbundene strukturierte Schichten, einzeln oder als Paar strukturierter Schichten, oder weitere damit verbundene mit äusseren flachen Schichten abgeschlossene strukturierte Schichten (d.h. zweite und weitere abgeschlossenen Doppelschichten), umfassen.

Vorzugsweise umfasst ein solches Wabenstrukturelement zwei oder mehrere Doppelschichten strukturierter Schichten mit oder ohne Deckschichten. Besonders bevorzugt umfasst ein solches Wabenstrukturelement zwei oder mehrerer miteinander verbundene Doppelschichten jeweils mit entsprechenden Deckschichten.

In einem erfindungsgemässen Wabenstrukturelement haben sowohl die durch das Zusammenfügen der strukturierten Schichten erhaltenen geschlossenen Wabenzellen (Sekundärstruktur), sowie die durch äussere flache Schichten (Deckschichten) abgeschlossenen einseitig offenen Wabenzellen der strukturierten Schichten selbst (Primärstruktur), die im wesentliche gleiche Form. D.h. die geschlossenen Wabenzellen haben eine im Wesentlichen sechseckige Grundflächen und Wandflächen, die im Wesentlichen viereckig sind. Für die Bezeichnungen im "Wesentlichen sechseckig" bzw. im "Wesentlichen viereckig" gilt dabei das oben gesagte.

In einer Weiterbildung der vorliegenden Erfindung sind die Wabenzellen ausgehend von ihrer Grundform, d.h. einer einfachen Vertiefung, vorzugsweise mit einer Gegenvertiefung versehen, die zur weiteren Unterteilung des Wabenzellenvolumens dient.

Die vorliegende Erfindung betrifft ferner ein Verfahren zur Herstellung eines Wabenstrukturelements in dem die Wabenzellen der Schichten mittels Vakuum, vorzugsweise durch ein Werkzeug, tiefgezogen und die Schichten nach dem Zusammenfügen miteinander verbunden werden. Das Zusammenfügen und/oder das Verbinden der Schichten erfolgt vorzugsweise unter Vakuum, in Luft oder in einer Gasatmosphäre.

Vorzugsweise werden die Schichten miteinander verklebt oder verschweisst. Übliche Verfahren zum Verbinden von Schichten, insbesondere von Kunststoffen, namentlich von Folien, sind dem Fachmann bekannt.

Verkleben umfasst dabei sämtliche Verfahren in denen ein weiterer Stoff zwischen den zusammengefügten Schichten die Verbindung herstellt, z.B. mittels Leim, Klebstoff, Lot oder 2-Komponenten-Systemen, etc.

Verschweissen umfasst dabei sämtliche Verfahren in denen ohne einen weiteren Stoff zwischen den zusammengefügten Schichten eine Verbindung herstellt wird, z.B. durch Heisssiegeln, etc.

Ein erfindungsgemässes Wabenstrukturelement wird vorzugsweise aus Kunststoff, Metall, oder Glas hergestellt, besonders bevorzugt aus Kunststoff. Geeignete Kunststoffe sind unter anderem Polyolefine, wie etwa Polypropylen (PP) oder Polyethylen (PE), Polyamide, wie etwa Nylon-6 bzw. Nylon-6,6, Polyurethane (PU), Polystyrol (PS), Polyvinylchlorid (PVC) oder Polyester, wie etwa Polyethylenterephthalat (PET).

Bei einer alternativen Ausführungsvariante des Verfahrens zur Herstellung eines erfindungsgemässen Wabenstrukturelements werden die entsprechenden Schichten entweder bereits unter Vakuum angeordnet und/oder mindestens unter Vakuum gasdicht verbunden, so dass geschlossene Vakuum-Zellen entstehen. Dabei können die Wabenzellen in einer alternativen Ausführungsform ferner mit einer entsprechenden Stützstruktur (z.B. durch Beschichtung oder durch Füllung der Wabenzellen) versehen sein.

Der Gasinnendruck der geschlossenen Vakuum-Zellen kann gegebenenfalls auch erst nach dem gasdichten Verbinden der entsprechenden Schichten durch chemische Reaktion in bereits geschlossenen Vakuum-Zellen, durch Abkühlung oder durch eine chemische Verbindung reduziert werden.

Bei einer weiteren alternativen Ausführungsvariante des Verfahrens zur Herstellung eines erfindungsgemässen Wabenstrukturelements werden die entsprechenden Schichten in Luft oder unter einer Gasatmosphäre (z.B. einer Stickstoff- oder Edelgasatmosphäre) angeordnet und unter Einschluss der Luft oder des entsprechenden Gases gasdicht verbunden, so dass geschlossene Wabenzellen entstehen. Der Gasinnendruck der geschlossenen Wabenzellen kann gegebenenfalls nach dem gasdichten Verbinden der entsprechenden Schichten z.B. durch chemische Reaktion in den bereits geschlossenen Wabenzellen oder durch eine chemische Verbindung, reduziert und/oder erhöht werden.

Im Folgenden wird die Erfindung unter Bezugnahme auf die beigefügten Zeichnungen anhand von Ausführungsbeispielen detaillierter beschrieben. Es zeigen:
- Fig. 1: - ein erstes Ausführungsbeispiel des erfindungsgemässen Wabenstrukturelements umfassend zwei Schichten, sowie ein zweites Ausführüngsbeispiel des erfindungsgemässen Wabenstrukturelements umfassend vier Schichten;
- Fig. 2: - ein zusammengefügtes Wabenstrukturelement des zweiten Ausführungsbeispiels aus Fig. 1;
- Fig. 3a: - eine Draufsicht auf eine sechseckige Wabenzelle eines weiteren Ausführungsbeispiels der Erfindung;
- Fig. 3b: - eine Schnittansicht der Wabenzelle der Fig. 3a entlang der Linie B;
- Fig. 3c: - eine Schnittansicht der Wabenzelle der Fig. 3a entlang der Linie C;
- Fig. 4a: - eine Draufsicht auf eine Schicht eines Wabenstrukturelements eines weiteren Ausführungsbeispiels der Erfindung mit sechseckigen Wabenzellen;
- Fig. 4b: - eine Schnittansicht der Schicht von Wabenzelle der Fig. 4a entlang der Linie A-A;
- Fig. 5: - eine Draufsicht auf ein Wabenstrukturelement eines weiteren Ausführungsbeispiels der Erfindung umfassend zwei zusammengefügte Schichten zur Bildung von geschlossenen Wabenzellen;
- Fig. 6: - eine schematische Darstellung einer Anordnung von Wabenzellen gemäss eines weiteren Ausführungsbeispiels der Erfindung;
- Fig. 7: - eine schematische Darstellung einer Anordnung von Wabenzellen gemäss eines weiteren Ausführungsbeispiels der Erfindung;
- Fig. 8: - eine schematische Darstellung einer Anordnung von Wabenzellen gemäss eines weiteren Ausführungsbeispiels der Erfindung;
- Fig. 9: - eine schematische Darstellung einer Ausführungsform einer einzelnen Wabenzelle; und
- Fig. 10: - eine schematische Darstellung einer weiteren Ausführungsform einer einzelnen Wabenzelle.

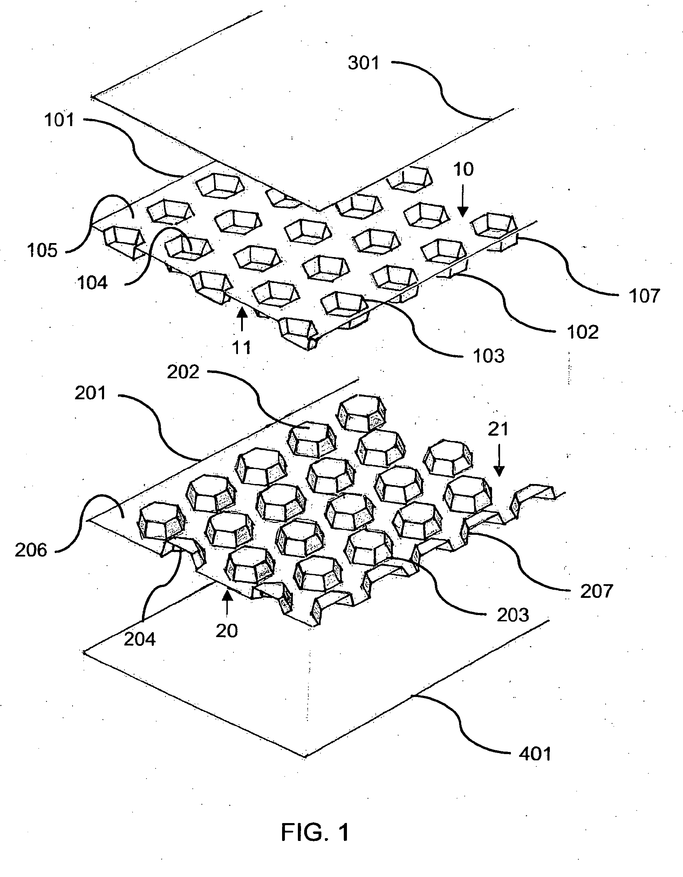

Figur 1 zeigt ein erstes Ausführungsbeispiel eines Wabenstrukturelements in dessen Einzelteilen umfassend zwei Schichten 101 und 201. Die erste Schicht 101 ist eine Schicht mit Vertiefungen in Form einseitig offener Wabenzellen 104 deren Randform 103 in der Schichtebene 105 ebenso sechseckig ist wie am Ende der Vertiefung 104, d.h. an deren Grundfläche 102. Die Wandflächen 107 der Vertiefungen 104 sind im Wesentlichen viereckig, vorzugsweise trapezförmig, und bezogen auf die Schichtebene 105 im Wesentlichen senkrecht, vorzugsweise leicht geneigt. Die zweite Schicht 201 ist eine Schicht mit Vertiefungen in Form einseitig offener Wabenzellen 204 deren Randform 203 in der Schichtebene 206 ebenso sechseckig ist wie am Ende der Vertiefung 204, d.h. an deren Grundfläche 202. Die Wandflächen 207 der Vertiefungen 204 sind im Wesentlichen viereckig, vorzugsweise trapezförmig, und bezogen auf die Schichtebene 206 im Wesentlichen senkrecht, vorzugsweise leicht geneigt. Die beiden Seiten umfassen ferner vorderseitig ebene Flächen 10 und 20, sowie rückseitig ebene Flächen 11 und 21. Als Rückseite wird die Seite bezeichnet, in welche z.B. das Tiefziehen einer Vertiefung erfolgt. Wohingegen die Vorderseite jene Seite ist die z.B. beim Tiefziehen unverändert flach bleibt.

Figur 1 zeigt darüber hinaus, ebenfalls in dessen Einzelteilen, ein zweites Ausführungsbeispiel umfassend vier Schichten. Zu den beiden bereits beschriebenen Schichten umfasst dieses Ausführungsbeispiel ferner zwei flache Schichten 301 und 401.

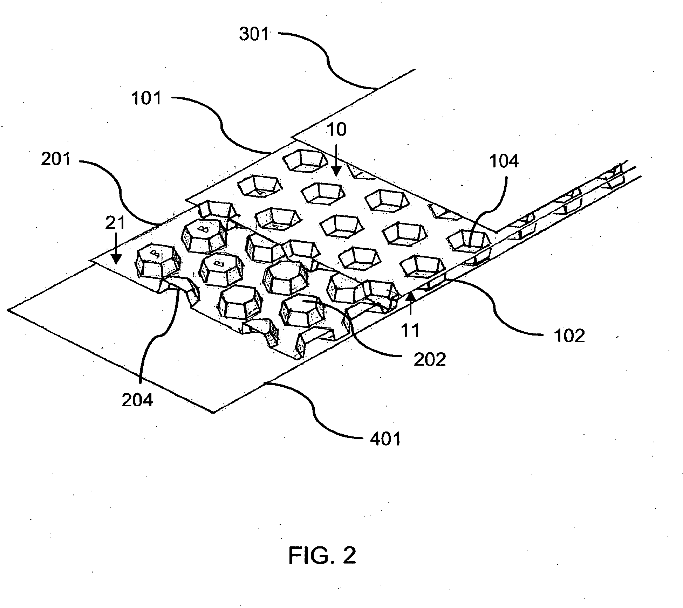

Figur 2 zeigt ein zusammengefügtes Wabenstrukturelement des zweiten Ausführungsbeispiels aus Figur 1, wobei die Vertiefungen 104 und 204 der beiden strukturierten Schichten 101 und 201 so ineinander greifen, dass geschlossene Wabenzellen gebildet werden, welche in der Figur auf Grund der gewählten Darstellungsform nicht sichtbar und deshalb nicht mit einem Bezugszeichen versehen sind, aber aus späteren Figuren erkennbar sind. Die Grundflächen 102 und 202 der einseitig offenen Wabenzellen 104 und 204 kontaktieren dabei die rückseitig ebenen Flächen 11 und 21 der jeweils gegenüberliegenden strukturierten Schicht. Die beiden flachen Schichten 301 und 401 dagegen kontaktieren die vorderseitig ebenen Flächen 10 und 20 der entsprechenden strukturierten Schicht und verschliessen die einseitig offenen Wabenzellen 104 und 204. Mit Ausnahme von Wabenzellen an den Rändern des Wabenstrukturelements sind in diesem Ausführungsbeispiel damit alle Wabenzellen geschlossen.

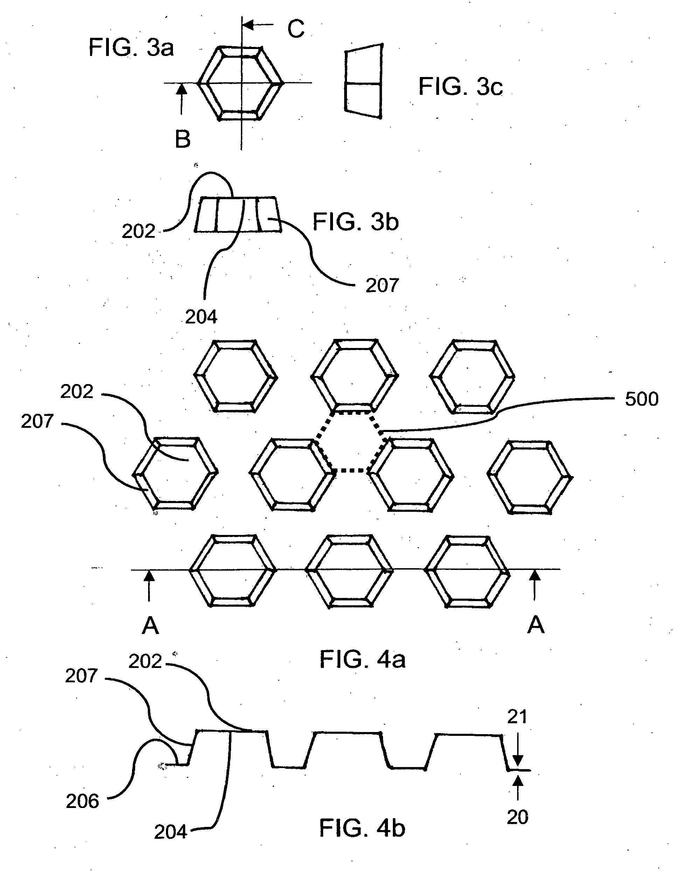

Figur 3 zeigt ein Detail eines erfindungsgemässen Ausführungsbeispiels eines Wabenstrukturelements. In einer Draufsicht ist in Figur 3a eine einzelne sechseckige Wabenzelle gezeigt, sowie zwei Schnittansichten in Figur 3b entlang der Linie B, sowie in Figur 3c entlang der Linie C der Figur 3a. Die einseitig offene Wabenzelle umfasst an deren Ende 204 eine sechseckige Grundfläche 202, sowie im Wesentlichen senkrecht, vorzugsweise leicht geneigt, dazu Wandflächen 207, die im wesentlichen viereckig, vorzugsweise trapezförmig, sind.

Figur 4 zeigt einen Teil eines weiteren Ausführungsbeispiels eines Wabenstrukturelements der Erfindung. In einer Draufsicht ist in Figur 4a eine strukturierte Schicht eines Wabenstrukturelements mit sechseckigen Wabenzelle gezeigt, sowie in Figur 4b eine Schnittansicht entlang der Linie A-A der Figur 4a. Die einseitig offenen Wabenzellen der strukturierten Schicht umfassen an deren Ende 204 eine sechseckige Grundfläche 202, sowie im Wesentlichen senkrecht, vorzugsweise leicht geneigt, dazu Wandflächen 207. Die strukturierte Schicht umfasst ferner eine vorderseitig ebene Flächen 20, sowie eine rückseitig ebene Fläche 21. Als Rückseite wird die Seite bezeichnet, in die z.B. das Tiefziehen einer Vertiefung erfolgt, wohingegen die Vorderseite die Seite ist die z.B. beim Tiefziehen unverändert flach bleibt. In Figur 4a ist ferner gestrichelt angedeutet wo eine geschlossene Wabenzelle 500 mit sechseckiger Grundfläche als Sekundärstruktur entsteht, wenn zwei komplementäre strukturierte Schichten zusammengefügt werden.

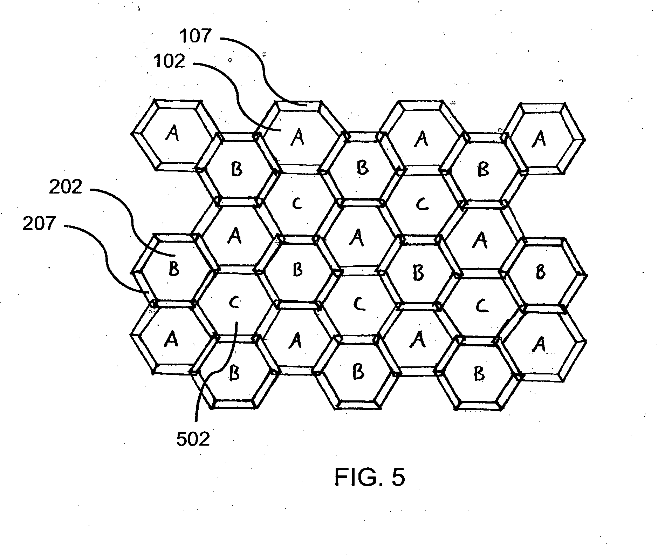

Figur 5 zeigt eine Draufsicht auf ein Wabenstrukturelement eines weiteren Ausführungsbeispiels der Erfindung umfassend zwei zusammengefügte Schichten (101 und 201 analog der Darstellung in vorangehenden Figuren), welche Wabenzellen A mit Grundflächen 102 und Wandflächen 107 beitragen, sowie Wabenzellen B mit Grundflächen 202 und Wandflächen 207, zur Bildung von geschlossenen Wabenzellen C mit Grundfläche 502, deren Wandflächen je zur Hälfte Wandflächen 107 der Wabenzellen A und Wandflächen 207 der Wabenflächen B bilden. Davon ausgehend, dass sowohl Wabenzellen A, als auch Wabenzellen B einseitig offene Wabenzellen sind, wird ein Wabenstrukturelement erhalten in dem mit Ausnahme von Randbereichen des Wabenstrukturelements ein Drittel der Wabenzellen (hier Wabenzellen C) geschlossen sind. Durch entsprechende Deckschichten kann daraus in einem weitergebildeten Ausführungsbeispiel ein Wabenstrukturelement erhalten werden in dem mit Ausnahme von Randbereichen alle Wabenzellen (A, B und C) geschlossen sind.

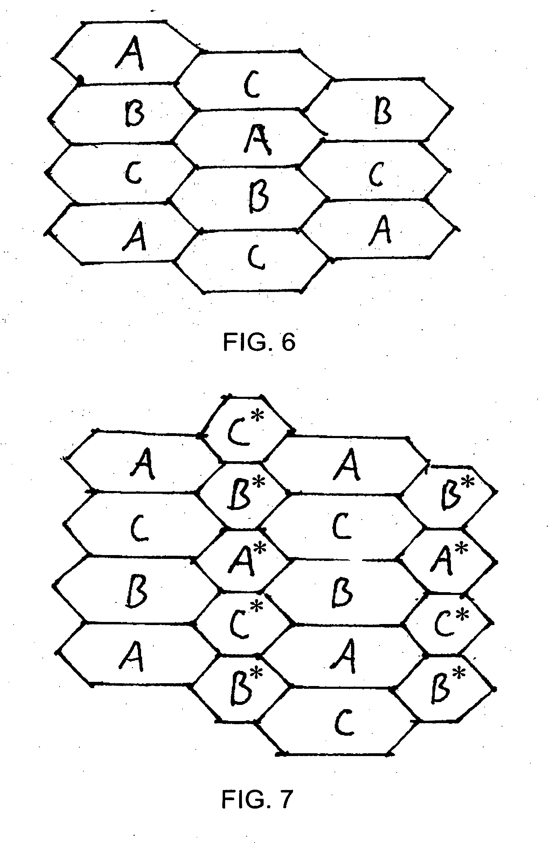

Figuren 6, 7 und 8 zeigen jeweils schematische Darstellungen von Wabenzellenanordnungen gemäss weiterer Ausführungsbeispiele der Erfindung. In Figur 6 sind dabei sechseckige, nicht-gleichseitige Wabenzellen A und B so angeordnet, dass ebensolche sechseckigen, nicht-gleichseitigen Wabenzellen C als geschlossene Wabenzellen zwischen den Zellen A und B gebildet werden, analog dem in Figur 5 ausführlich dargestellten Konstruktionsprinzip.

In Figur 7 sind dabei sechseckige, nicht-gleichseitige Wabenzellen A und B sowie sechseckige, gleichseitige Wabenzellen A* und B* so angeordnet, dass ebensolche sechseckige, gleichseitige Wabenzellen C* sowie sechseckige, nicht-gleichseitige Wabenzellen C als geschlossene Wabenzellen zwischen den Zellen A, A*, B und B* gebildet werden, analog dem in Figur 5 ausführlich dargestellten Konstruktionsprinzip. Dabei sind die Wabenzellen A und A* in einer ersten strukturierten Schicht gebildet und die Wabenzellen B und B* entsprechend in einer zweiten strukturierten Schicht.

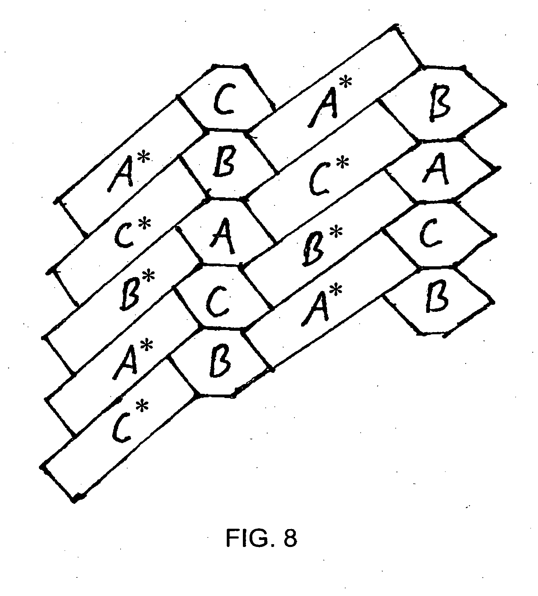

Das selbe gilt auch für die in Figur 8 dargestellte Wabenzellenanordnung, wobei A* und B* Wabenzellen mit viereckiger Grundfläche sind, welche entsprechend neben sechseckigen geschlossenen Wabenzellen C, Wabenzellen C* mit viereckiger Grundfläche bilden.

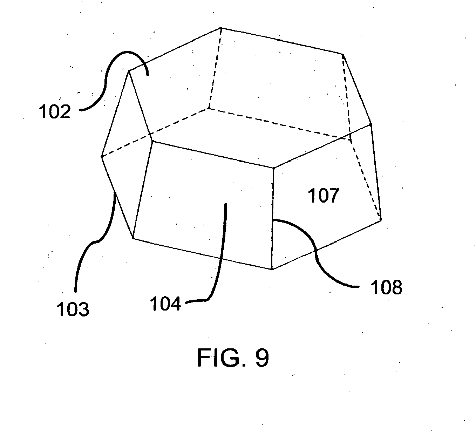

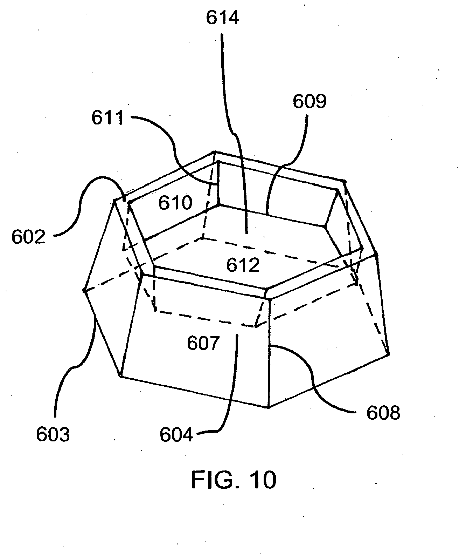

Figur 9 und 10 zeigen jeweils schematische Darstellungen verschiedener Ausführungsformen einer einzelnen Wabenzelle die bei deren Verwendung in Wabenstrukturelementen gemäss weiterer Ausführungsbeispiele der Erfindung vorteilhafte Eigenschaften aufweisen.

Figur 9 ist eine einseitig offene Wabenzelle 104 mit sechseckig-gleichseitiger Grundfläche 102. Die Grundfläche auf Höhe der hier nicht gezeigten Schichtebene ist ebenfalls sechseckig-gleichseitig, wobei in der hier gezeigten Ausführungsform die Kantenlänge 103 auf der Schichtebene etwas grösser ist als an der Grundfläche 102. Die Kanten 108 der Wandflächen 107 stehen damit nicht vollständig senkrecht auf der hier nicht gezeigten Schichtebene, sondern sind ebenso wie die Wandflächen 107 selbst, leicht geneigt. Die Wandflächen 107 erhalten damit eine viereckig-trapezförmige Fläche. Diese Ausführungsform hat insbesondere Vorteile bei der Herstellung von strukturierten Schichten im Tiefziehverfahren, da sich die Wabenzellen leichter aus dem Werkzeug herauslösen lassen.

Figur 10 zeigt eine Weiterbildung der Wabenzellen aus Figur 9, die ausgehend von der darin beschriebenen Grundform mit einer Gegenvertiefung 614 versehen ist, die zur weiteren Unterteilung des Wabenzellenvolumens dient. An Stelle der ursprünglichen Grundfläche (in Figur 9 Grundfläche 102) weist die Wabenzelle neu eine untere Kantenfläche 602, sowie eine neue (innere) Grundfläche 612 auf. Letztere befindet sich zwischen der Ebene der ursprünglichen Vertiefung der Grundform, welche in der Abbildung Kantenfläche 602 entspricht, und der hier nicht gezeigten Schichtebene, welche in der Abbildung Kante 603 entspricht. Damit wird weiterhin eine einseitig offene Wabenzelle mit sechseckig-gleichseitiger Grundfläche erhalten. Diese umfasst aber neben der sechseckigen Kantenfläche 602 eine ebenfalls sechseckige neue (innere) Grundfläche 612, mit Randkanten 609, sowie viereckigen Wandflächen 610 mit entsprechenden Randkanten 611. Wird diese Wabenzelle in einem erfindungsgemässen Wabenzellenstrukturelement eingesetzt, so werden beim Zusammenfügen der beiden strukturierten Schichten neben den geschlossenen Wabenzellen der Sekundärstruktur wie oben beschrieben, ferner auch die Gegenvertiefungen durch die entsprechenden ebenen Flächen der gegenüberliegenden strukturierten Schicht abgeschlossen. Zum einen erhöht sich damit der Anteil abgeschlossener Zellräume unabhängig davon ob in einer weiteren Schritt zusätzliche Deckschichten aufgebracht werden oder nicht. Zum anderen werden die abgeschlossenen Zellräume damit insgesamt kleiner, was insbesondere in Isolationsanwendungen vorteilhaft ist, da so der Wärmetransport durch Konvektion verringert wird.

Die entsprechenden Anpassungen an den Herstellungsprozess sind vom Fachmann ohne weiteres zu lösen, da lediglich die Werkzeuge z.B. in einem Tiefziehprozess, entsprechend der neuen Wabenzellengeometrie angepasst werden müssen. Gleiches gilt für die Anpassungen des Prozesses beim Verbinden der strukturierten Schichten.

Die Herstellung eines bevorzugten erfindungsgemässen Wabenstrukturelements erfolgt in zwei Schritten:

In einem ersten Schritt wird jede dritte Wabenzelle einer zu erstellenden Wabenstruktur auf einer ersten Fläche 105 (und/oder 206) einer Folie tiefgezogen, so dass eine erste Folie mit regelmässig über die Folie verteilten einseitig offenen Wabenzellen 104 (und/oder 204) entsteht.

In einem zweiten Schritt werden zwei solcher Folien (101, 201) einander entgegengesetzt zusammengefügt und verbunden (d.h. verklebt oder verschweisst), so dass begrenzt von den Wandflächen 107 und 207 der tiefgezogenen Wabenzellen 104 und 204 der Primärstruktur geschlossene Wabenzellen 500 der Sekundärstruktur gebildet werden.

In weiteren Schritten können mehrere solcher Doppelschichten aufeinander gelegt und miteinander verbunden werden, wodurch einige (oder vorzugsweise) alle der einseitig offenen Wabenzellen 104 und/oder 204 durch die darüber liegende Schicht abgeschlossen werden.

Die Herstellung eines weiteren bevorzugten erfindungsgemässen Wabenstrukturelements erfolgt in drei Schritten:

In einem ersten Schritt wird jede dritte Wabenzelle einer zu erstellenden Wabenstruktur auf einer ersten Fläche 105 (und/oder 206) einer Folie tiefgezogen, so dass eine erste Folie mit regelmässig über die Folie verteilten einseitig offenen Wabenzellen 104 (und/oder 204) entsteht.

In einem zweiten Schritt werden zwei solcher Folien (101, 201) einander entgegengesetzt zusammengefügt und verbunden (d.h. verklebt oder verschweisst), so dass begrenzt von den Wandflächen 107 und 207 der tiefgezogenen Wabenzellen 104 und 204 der Primärstruktur geschlossene Wabenzellen 500 der Sekundärstruktur gebildet werden.

In einem dritten Schritt wird dann die dadurch entstandene Wabenstruktur beidseitig mit je einer flachen Folie 301 und 401 abgedeckt und verbunden (d.h. verklebt oder verschweisst), so dass die einseitig offenen Wabenzellen 104 und 204 abgeschlossen werden und ein Wabenstrukturelement mit ausschliesslich geschlossenen Wabenzellen entsteht.

In weiteren Schritten können mehrere solcher Wabenstrukturelemente aufeinander gelegt und miteinander verbunden werden. Solche mehrschichtigen Wabenstrukturelemente, insbesondere solche die durch Deckschichten abgeschlossen sind, werden auch als Paneele bezeichnet.

In der vorliegenden Erfindung können in den genannten Ausführungsbeispielen unterschiedliche Materialien und verschiedene Materialstärken für die strukturierten Schichten, sowie für die flachen Schichten verwendet werden. So können zum Beispiel die strukturierten Schichten aus einem Material hergestellt werden, das für Wärmestrahlung durchlässig ist (z.B. transparentes PET, Glas usw.) und die flachen Schichten aus einem für Wärmestrahlung undurchlässigen Material (z.B. Aluminium, Infrarotfilter usw.)

Insbesondere das für die Stützstruktur der strukturierten Schichten verwendete Material weist vorteilhafter Weise eine geringe Wärmeleitfähigkeit auf. Das für die flachen Schichten verwendete Material weist dagegen insbesondere im Falle einer für Wärmestrahlung transparenten Stützstruktur, vorteilhafter Weise einen möglichst geringen Emissionsgrad für Wärmestrahlung auf. Oft haben Materialien mit einem geringen Emissionsgrad für Wärmestrahlung, wie z.B. Aluminium, eine hohe Wärmeleitfähigkeit. Die Kombination von unterschiedlichen Materialien für Stütz- und Deckschichten bringt deshalb insbesondere für Isolationsanwendungen Vorteile.

In einem weiteren vorteilhaften Ausführungsbeispiel der Erfindung sind die beiden strukturierten Schichten 101 und 201 aus unterschiedlichen Materialien hergestellt. Zum Beispiel ist die strukturierte Schicht 101 aus einem starken, tragfähigen Material hergestellt, um die Struktur zu stützen, und die strukturierte Schicht 201 ist aus einem dünnen Material hergestellt, um die sekundären Wabenzellen zu schliessen.

In einem weiteren vorteilhaften Ausführungsbeispiel können die Wabenzellen eines erfindungsgemässen Wabenstrukturelements mit Luft oder mit verschiedenen Gasen gefüllt sein. Dazu gehören unter anderem Gase wie z.B. Stickstoff oder Edelgase wie z.B. Argon oder Krypton, die dazu geeignet sind die Wärmeleitfähigkeit zu reduzieren, oder Gase wie z.B. SF₆, das zur Schalldämmung geeignet ist. Solche Materialien sind u.a. als Bau- und Werkstoffe geeignet. Besonders bevorzugt sind die Wabenzellen dabei mit Luft gefüllt.

In einem weiteren vorteilhaften Ausführungsbeispiel können die Wabenzellen eines erfindungsgemässen Wabenstrukturelements mit verschiedenen Materialien gefüllt sein, wie zum Beispiel wärmespeichernde Materialien, insbesondere Materialien die als Latentwärmespeicher bekannt sind. Diese ändern z.B. bei einer bestimmten Temperatur die Konsistenz und können dadurch die Temperatur lange Zeit konstant halten. Solche Materialien sind u.a. für Verpackungen von Medikamenten geeignet, die bei einer konstanten Temperatur transportiert werden müssen.

In einem weiteren vorteilhaften Ausführungsbeispiel umfasst ein Wabenstrukturelement mit geschlossenen Wabenzellen eine Vielzahl von geschlossenen Vakuumzellen. Die Vakuumzellen bilden zusammen einen geschlossenen Vakuumraum. Solche Wabenstrukturelemente, insbesondere in Form von Paneelen, sind z.B. als Bau- und Werkstoffe geeignet. Bei üblichen Tätigkeiten im Gebäudebau, wie beispielsweise Bohren, Sägen oder Zuschneiden, wird der Vakuumraum dann zwar beschädigt, aber nur für eine kleine Zahl der Vielzahl von geschlossenen Vakuumzellen. Damit wird eine durch den gesamten Vakuumraum gebildete Vakuumisolation nur geringfügig beeinträchtigt. Ein Wabenstrukturelement mit einer Vielzahl von geschlossenen Vakuumzellen ermöglicht, dass daraus hergestellte Paneele in individueller Form hergestellt und/oder im Gebäudebau auch vor Ort in entsprechende Form gebracht und bearbeitet werden können ohne dabei die Vakuumisolation erheblich zu beeinträchtigen.

Zu den vorbeschriebenen Wabenstrukturelementen sind weitere konstruktive Variationen realisierbar. Insbesondere sind Kombinationen der verschiedenen Ausführungsbeispiele bzw. Kombinationen der verwendeten Verfahren denkbar, um ein Wabenstrukturelement mit mindestens teilweise geschlossener Wabenstruktur herzustellen.

## Patentansprüche

1. Wabenstrukturelement, umfassend mindestens zwei Schichten (101, 201), die zur Bildung einer mindestens teilweise geschlossenen Wabenstruktur miteinander verbunden sind, wobei die eine der beiden Schichten (101, 201) eine erste strukturierte Schicht (101) mit einseitig offenen Wabenzellen (104) und die andere der beiden Schichten (101, 201) eine zweite strukturierte Schicht (201) mit einseitig offenen Wabenzellen (204) ist,
**dadurch gekennzeichnet, dass** die beiden strukturierten Schichten (101, 201) so zusammengefügt sind, dass die Öffnungen der Wabenzellen (104) der ersten strukturierten Schicht (101) von der zweiten strukturierten Schicht (201) wegweisen und die Öffnungen der Wabenzellen (204) der zweiten strukturierten Schicht (201) von der ersten strukturierten Schicht (101) wegweisen und die beiden strukturierten Schichten (101, 201) zusammen eine Wabenstruktur mit geschlossenen Wabenzellen (500) zwischen den Wabenzellen (104) der ersten strukturierten Schicht (101) und den Wabenzellen (204) der zweiten strukturierten Schicht (101) bilden.

2. Wabenstrukturelement gemäss Anspruch 1, **dadurch gekennzeichnet, dass** die beiden strukturierten Schichten (101, 201) in gleicher Weise strukturiert sind.

3. Wabenstrukturelement gemäss Anspruch 1 oder 2,
**dadurch gekennzeichnet, dass** die strukturierten Schichten (101, 201) durch tiefgezogene Folien gebildet sind.

4. Wabenstrukturelement (1) gemäss einem der Ansprüche 1 bis 3, **dadurch gekennzeichnet, dass** die einseitig offenen Wabenzellen (104, 204) Vertiefungen mit im Wesentlichen sechseckiger Grundfläche (102, 202) sind.

5. Wabenstrukturelement gemäss einem der Ansprüche 1 bis 4, **dadurch gekennzeichnet, dass** mit Ausnahme von Randbereichen des Wabenstrukturelements ein Drittel der Wabenzellen geschlössene Wabenzellen (500) sind.

6. Wabenstrukturelement gemäss einem der Ansprüche 1 bis 5, **dadurch gekennzeichnet, dass** die einseitig offenen Wabenzellen Wandflächen (107, 207) aufweisen, die im Wesentlichen viereckig, insbesondere trapezförmig, rhomboid oder rechteckig sind.

7. Wabenstrukturelement gemäss einem der Ansprüche 1 bis 6, **dadurch gekennzeichnet, dass** die offenen Wabenzellen (104, 204) mindestens einer der beiden strukturierten Schichten (101, 201) durch eine äussere flache Schicht (301, 401) abgeschlossen sind.

8. Wabenstrukturelement gemäss Anspruch 7, **dadurch gekennzeichnet, dass** die offenen Wabenzellen (104, 204) der beiden strukturierten Schichten (101, 201) jeweils durch eine äussere flache Schicht (301, 401) abgeschlossen sind.

9. Wabenstrukturelement gemäss Anspruch 7 oder 8
**dadurch gekennzeichnet, dass** die eine äussere flache Schicht oder die äusseren flachen Schichten (301, 401) durch eine flache Folie gebildet sind.

10. Wabenstrukturelement gemäss einem der Ansprüche 1 bis 9, **dadurch gekennzeichnet, dass** mit Ausnahme von Randbereichen des Wabenstrukturelements alle Wabenzellen des Wabenstrukturelements geschlossen sind.

11. Wabenstrukturelement gemäss einem der Ansprüche 1 bis 10, **dadurch gekennzeichnet, dass** das Wabenstrukturelement zusätzlich zu der ersten und zweiten strukturierten Schicht (101, 201) und/oder den mit äusseren flachen Schichten (301, 401) abgeschlossenen ersten und zweiten strukturierten Schichten (101, 201) weitere damit verbundene strukturierte Schichten oder mit äusseren flachen Schichten abgeschlossene strukturierte Schichten umfasst.

12. Wabenstrukturelement gemäss einem der Ansprüche 1 bis 11, **dadurch gekennzeichnet, dass** die geschlossenen Wabenzellen (500) eine im Wesentlichen sechseckige Grundfläche haben und Wandflächen aufweisen, die im Wesentlichen viereckig, insbesondere trapezförmig, rhomboid oder rechteckig sind.

13. Wabenstrukturelement gemäss einem der Ansprüche 1 bis 12, **dadurch gekennzeichnet, dass** die einseitig offenen Wabenzellen ausgehend von der Grundform einer einfachen Vertiefung (104, 204) eine Gegenvertiefung (614) aufweisen.

14. Verfahren zur Herstellung eines Wabenstrukturelements gemäss einem der Ansprüche 1 bis 13, **dadurch gekennzeichnet, dass** die Wabenzellen der Schichten mittels Vakuum tiefgezogen und die Schichten nach dem Zusammenfügen verbunden werden.

15. Verfahren nach Anspruch 14, **dadurch gekennzeichnet, dass** das Zusammenfügen und/oder das Verbinden der Schichten unter Vakuum, in Luft oder in einer Gasatmosphäre erfolgt.

## Claims

1. Honeycomb structure element comprising at least two layers (101, 201), which are bonded together to form an at least partially closed honeycomb structure, wherein one of the two layers (101, 201) is a first structured layer (101) with honeycomb cells (104) open on one side, and the other of the two layers (101, 201) is a second structured layer (201) with honeycomb cells (204) open on one side,
**characterized in that** the two structured layers (101, 201) are joined together in such a way that the openings of the honeycomb cells (104) of the first structured layer (101) point away from the second structured layer (201), and the openings of the honeycomb cells (204) of the second structured layer (201) point away from the first structured layer (101), and the two structured layers (101, 201) together form a honeycomb structure with closed honeycomb cells (500) between the honeycomb cells (104) of the first structured layer (101) and the honeycomb cells (204) of the second structured layer (101).

2. Honeycomb structure element according to claim 1, **characterized in that** the two structured layers (101, 201) are structured identically.

3. Honeycomb structure element according to claim 1 or 2, **characterized in that** the structured layers (101, 201) are comprised of deep-drawn films.

4. Honeycomb structure element (1) according to one of claims 1 to 3, **characterized in that** the honeycomb cells (104, 204) open on one side are depressions with an essentially hexagonal footprint (102, 202).

5. Honeycomb structure element according to one of claims 1 to 4, **characterized in that** one third of the honeycomb cells are closed honeycomb cells (500), except for the edge regions of the honeycomb structure element.

6. Honeycomb structure element according to one of claims 1 to 5, **characterized in that** the honeycomb cells open on one side exhibit wall surfaces (107, 207), which are essentially quadrangular, in particular trapezoidal, rhomboid or rectangular.

7. Honeycomb structure element according to one of claims 1 to 6, **characterized in that** the open honeycomb cells (104, 204) of at least one of the two structured layers (101, 201) are sealed by an outer flat layer (301, 401).

8. Honeycomb structure element according to claim 7, **characterized in that** the open honeycomb cells (104, 204) of the two structured layers (101, 201) are each sealed by an outer flat layer (301, 401).

9. Honeycomb structure element according to claim 7 or 8, **characterized in that** the one outer flat layer or outer flat layers (301, 401) are formed by a flat film.

10. Honeycomb structure element according to one of claims 1 to 9, **characterized in that** all honeycomb cells of the honeycomb structure element are closed, except for edge regions of the honeycomb structure element.

11. Honeycomb structure element according to one of claims 1 to 10, **characterized in that**, in addition to the first and second structured layer (101, 201) and/or the first and second structured layers (101, 201) sealed with outer flat layers (301, 401), the honeycomb structure element comprises, bonded thereto, additional structured layers or structured layers sealed with outer flat layers.

12. Honeycomb structure element according to one of claims 1 to 11, **characterized in that** the closed honeycomb cells (500) have an essentially hexagonal footprint and exhibit wall surfaces that are essentially quadrangular, in particular trapezoidal, rhomboid or rectangular.

13. Honeycomb structure element according to one of claims 1 to 12, **characterized in that**, proceeding from the basic form of a simple depression (104, 204), the honeycomb cells open on one side exhibit a counter-depression (614).

14. Method for manufacturing a honeycomb structure element according to one of claims 1 to 13, **characterized in that** the honeycomb cells of the layers are deep drawn by means of a vacuum, and the layers are bonded with each other after being joined together.

15. Method according to claim 14, **characterized in that** the layers are joined and/or bonded together under a vacuum, in the air or in a gas atmosphere.

## Revendications

1. Élément à structure en nid d'abeille, comprenant au moins deux couches (101, 201) qui, pour former une structure en nid d'abeille au moins partiellement fermée, sont reliées l'une à l'autre, dans lesquelles l'une des deux couches (101, 201) est une première couche structurée (101) avec des cellules en nid d'abeille (104) ouvertes d'un côté et l'autre des deux couches (101, 201) est une seconde couche structurée (201) avec des cellules en nid d'abeille (204) ouvertes d'un côté,
**caractérisé en ce que** les deux couches structurées (101, 201) sont assemblées de telle façon que les ouvertures des cellules en nid d'abeille (104) de la première couche structurée (101) sont détournées de la seconde couche structurée (201) et que les ouvertures des cellules en nid d'abeille (204) de la seconde couche structurée (201) sont détournées de la première couche structurée (101) et les deux couches structurées (101, 201) forment ensemble une structure en nid d'abeille avec des cellules en nid d'abeille (500) fermées entre les cellules en nid d'abeille (104) de la première couche structurée (101) et les cellules en nid d'abeille (204) de la seconde couche structurée (201).

2. Élément à structure en nid d'abeille selon la revendication 1, **caractérisé en ce que** les deux couches structurées (101, 201) sont structurées de la même manière.

3. Élément à structure en nid d'abeille selon la revendication 1 ou 2, **caractérisé en ce que** les couches structurées (101, 201) sont formées par des feuilles embouties.

4. Élément à structure en nid d'abeille (1) selon l'une des revendications 1 à 3, **caractérisé en ce que** les cellules en nid d'abeille (104, 204) ouvertes d'un côté sont des renfoncements avec une surface de base (102, 202) sensiblement hexagonale.

5. Élément à structure en nid d'abeille selon l'une des revendications 1 à 4, **caractérisé en ce que**, à l'exception des zones de bordures de l'élément à structure en nid d'abeille, un tiers des cellules en nid d'abeille sont des cellules en nid d'abeille fermées (500).

6. Élément à structure en nid d'abeille selon l'une des revendications 1 à 5, **caractérisé en ce que** les cellules en nid d'abeille ouvertes sur un côté comportent des surfaces de paroi (107, 207) qui sont sensiblement quadrangulaires, en particulier en forme de trapèze, de rhomboïde ou rectangulaire.

7. Élément à structure en nid d'abeille selon l'une des revendications 1 à 6, **caractérisé en ce que** les cellules en nid d'abeille ouvertes (104, 204) de l'une au moins des deux couches structurées (101, 201) sont refermées par une couche plane extérieure (301, 401).

8. Élément à structure en nid d'abeille selon la revendication 7, **caractérisé en ce que** les cellules en nid d'abeille ouvertes (104, 204) des deux couches structurées (101, 201) sont refermées respectivement par une couche extérieure plane (301, 401).

9. Élément à structure en nid d'abeille selon la revendication 7 ou 8, **caractérisé en ce que** l'une des couches extérieures planes ou les deux couches extérieures planes (301, 401) est/sont formée(s) par une feuille plane.

10. Élément à structure en nid d'abeille selon l'une des revendications 1 à 9, **caractérisé en ce que**, à l'exception des zones de bordures de l'élément à structure en nid d'abeille, toutes les cellules en nid d'abeille de l'élément à structure en nid d'abeille sont fermées.

11. Élément à structure en nid d'abeille selon l'une des revendications 1 à 10, **caractérisé en ce que** l'élément à structure en nid d'abeille comprend, en supplément de la première et de la seconde couche structurée (101, 201) et/ou en supplément de la première et de la seconde couche structurée (101, 201) refermées avec des couches extérieures planes (301, 401), d'autres couches structurées qui leur sont reliées ou des couches structurées refermées avec des couches extérieures planes.

12. Élément à structure en nid d'abeille selon l'une des revendications 1 à 11, **caractérisé en ce que** les cellules en nid d'abeille fermées (600) présentent une surface de base sensiblement hexagonale et des surfaces de parois qui sont sensiblement quadrangulaires, en particulier en forme de trapèze, de rhomboïde ou rectangulaire.

13. Élément à structure en nid d'abeille selon l'une des revendications 1 à 12, **caractérisé en ce que** les cellules en nid d'abeille ouvertes d'un côté présentent, en partant de la forme de base d'un renfoncement simple (104, 204), un renfoncement antagoniste (614).

14. Procédé pour la fabrication d'un élément à structure en nid d'abeille selon l'une des revendications 1 à 13, **caractérisé en ce que** les cellules en nid d'abeille des couches sont embouties sous vide et les couches sont reliées après l'assemblage.

15. Procédé selon la revendication 14, **caractérisé en ce que** l'assemblage et/ou la liaison des couches a lieu sous vide, dans de l'air ou dans une atmosphère de gaz.
